# EUROPEAN PATENT APPLICATION

(11) **EP 2 821 690 A1**
(43) Date of publication of application: **07.01.2015**
(21) Application number: 12875614.5
(22) Date of filing: 27.04.2012
(51) Int. Cl.: F21S 2/00, A01K 63/06

(54) **LIGHTING DEVICE AND METHOD FOR AQUATIC LIFE FOR BRIGHT AND BEAUTIFUL VIEW**

(71) Applicant: Shenzhen Xingrisheng Industrial Co., Ltd., Shenzhen, Guangdon 518116 (CN)
(72) Inventor: DENG, Peixing, Shenzhen Guangdong 518116 (CN); LIU, Xiaoming, Shenzhen Guangdong 518116 (CN)
(74) Representative: Grättinger Möhring von Poschinger Patentanwälte Partnerschaft
(86) International application number: PCT/CN2012/074836
(87) International publication number: WO 2013/159340

(57) **Abstract**

A lighting device for an aquarium includes a sealed waterproof lamp shell (1) and a light string arranged (6) and connected with LED lamps (4), the light string (6) positioned inside the sealed waterproof lamp shell (1). Select LED chips(4r,4g and 4b) shooting red, green and blue light respectively, which are assembled or directly inject-formed into an integrated LED lamp (4), synthetic light shot from the LED lamp (4) is slightly reddish violet, luminous flux Φ for three base colors red, green and blue are respectively Φᵣ from 32% to 41%, Φ_{g} from 47% to 54% and Φ_{b} from 12% to 14%. Illumination effect is improved for the aquatics, and ornamental effect is enhanced.

## Description

### TECHNICAL FIELD

The invention relates to a lighting device for aquarium, especially relates to a lighting method and device enabling aquatics to look bright and beautiful.

### BACKGROUND

Fluorescent lamp, energy saving lamp or ordinary white light LED lamp are commonly used for lighting of aquarium with prior art, nevertheless, such lamps only possess general lighting functions, failing to achieve visual effect of beautifying fish colors. With respect to lighting of aquarium of prior art, although colored light source is also adopted for lighting embellishment, and definite visual effect has achieved, due to identical or close coloration for fish, water scenery and water as compared with the said light source, which enables gradation and contrast ratio of scenery inside the aquarium to be worse, and dose not conform with people's appreciation habit, ornamental value has decreased.

### CONTENT OF THE INVENTION

The technical problems this invention aims to settle is to provide a lighting method and device which enable aquatics to look bright and beautiful by means of avoiding the deficiencies of the above prior art. Thus, fishes in the aquarium will look glorified and brightened, which are beautiful, moreover, installation method is simple owe to simple equipment structure, which is easy to be carried out.

To solve the above technical problems, technical proposal put forward by the invention is that: a lighting method enabling aquatics to look bright and beautiful, is used for lighting device of aquaria, the lighting device includes a sealed waterproof lamp shell and a light string arranged and connected with LED lamps, the light string positioned inside the sealed waterproof lamp shell, the method comprising steps as follows :
select LED chips shooting red, green and blue light respectively, which are assembled or directly inject-formed into an integrated LED lamp, synthetic light shot from the LED lamp is slightly reddish violet, luminous flux Φ for three base colors red, green and blue are respectively Φᵣ from 32% to 41%, Φ_{g} from 47% to 54% and Φ_{b} from 12% to 14%.

As to the said LED lamp assembled or directly inject-formed into one, in it the area and electric power for the chip shooting red light are respectively greater than that for the chip shooting green or blue light.

For the said LED lamp assembled or directly inject-formed into one, in it the quantity of the chip shooting red light is twice that of the chip shooting green or blue light, while the area and electric power for single chip shooting red light are respectively identical to that for single chip shooting green or blue light.

The said of lighting method comprising the following step: connect various chips shooting light of the same color in each LED lamp composing the light string in series respectively, then connect a potentiometer in series for them respectively, adjust current of each series branch to appropriate value, after proportion of luminous flux for the three colors has met requirements, replace the said potentiometer by a resistor respectively before mass production.

For an embodiment of the invention, wavelength of the red, green and blue light shot from the chips of the said LED lamp respectively are : wavelength for red light λᵣ from 615nm to 630 nm, wavelength for green light λ_{g} from 510 nm to 530 nm, and wavelength for blue light λb from 455 nm to 475 nm.

In the other preferred embodiment, better choice for wavelength of the red, green and blue light shot from the chips of the said LED lamp can be: wavelength for red light λᵣ from 620nm to 625 nm, wavelength for green light λ_{g} from 520nm to 525 nm, and wavelength for blue light λ_{b} from 465 nm to 470 nm.

To solve the above technical problems, the invention has also put forward the other technical proposal: design a LED lamp which enables aquatics to look bright and beautiful, which is also used for lighting device of aquaria, wherein the said LED lamp is assembled or directly inject-formed by various LED chips shooting red, green and blue light respectively into one, in it the area and electric power for the chips shooting red light are respectively greater than that for the chips shooting green or blue light.

For another embodiment of the invention, the quantity of the chip shooting red light of the said LED lamp is twice that of the chip shooting green or blue light, while the area and electric power for the single chip shooting red light are identical to that for single chip shooting green or blue light.

The wavelength of red, green and blue light shot by the LED chips of the said LED lamp respectively are: wavelength for red light λᵣ from 615nm to 630 nm, wavelength for green light λ_{g} from 510 nm to 530 nm, and wavelength for blue light λ_{b} from 455 nm to 475 nm.

To solve the above technical problems, another technical proposal is put forward by the invention: a LED lighting device which enables aquatics to look bright and beautiful, comprising a sealed waterproof lamp shell and a light string arranged and connected inside it with LED lamps ,wherein the said LED lamp is an integrated unit assembled or directly inject-formed with LED chips shooting red, green and blue light respectively, in it the area and electric power for the chips shooting red light are respectively greater than that for the chips shooting green or blue light; chips shooting light of the same color in the said LED lamps of the said light string are connected in series respectively, and in the each series branch is connected respectively with a resistor or a potentiometer which enable proportion of luminous flux for the three base colors to meet the requirements.

The quantity of the chip shooting red light of the said LED lamp is twice that of the chip shooting green or blue light, while the area and electric power for the single chip shooting red light are identical to that for single chip shooting green or blue light.

The wavelength of red, green and blue light shot by the chips of the said LED lamp shooting respectively are: wavelength for red light λᵣ is from 615nm to 630 nm, wavelength for green light λ_{g} from 510 nm to 530 nm, and wavelength for blue light λ_{b} from 455 nm to 475 nm. Among luminous flux Φ for the said light string, luminous flux for three base colors red, green and blue are respectively Φᵣ from 32% to 41%, Φ_{g} from 47% to 54% and Φ_{b} form 12% to 14%.

Compared with the present technology, beneficial effects of the invention lie in: when adopting lighting device of the invention, there is special spectrum for the light source, which can enable the color of varieties of aquarium fishes such as red parrot fish, golden fish, Dragon fish, golden carp and Swordtail, etc. to be more gorgeous, under the illumination of the lighting device which enables the fish to be glorified and brightened, fishes are of strong color, bright and brilliant, moreover, water landscape has different degree of burnish and coloration, enabling the scenery of the whole water tank to be more pleased to the eyes and more ornamental. Light of the device is white and slight light purplish red in the air. Since absorption and reflection of light ray of different wavelengths by water are different, when water is illuminated by the lamp, water color is basically unchanged, which is consistent with people's viewing habit. Besides, the device can also been used as spatial decoration lighting, with which, most objects will be glorified, brightened and more colorful.

### BRIEF DESCRIPTION OF THE DRAWINGS

Figure 1 is front view of the LED lighting device as stated in the preferable embodiments for the lighting method and device of the invention which enables aquatics to look bright and beautiful.
Figure 2 is structure diagram for the said LED lamp 4 as directly inject-formed by LED chips 4r, 4g and 4b in the preferable embodiment 1 of the invention.
Figure 3 is circuit diagram for the LED lamp 4 as shown in Figure 2.
Figure 4 is circuit connection diagram for light string 6 connected by the said LED lamps 4 in the said preferable embodiment 1.
Figure 5 is structure diagram for the said LED lamp 4 as directly inject-formed by LED chips 4r, 4g and 4b in the preferable embodiment 2 of the invention.
Figure 6 is circuit diagram for the LED lamp 4 as shown in Figure 5.
Figure 7 is circuit connection diagram for light string 6 connected by the said LED lamps 4 in the said preferable embodiment 2.

### DETAILED DESCRIPTION

The present invention is further described in the following, combining with the preferable embodiments shown in the figures.

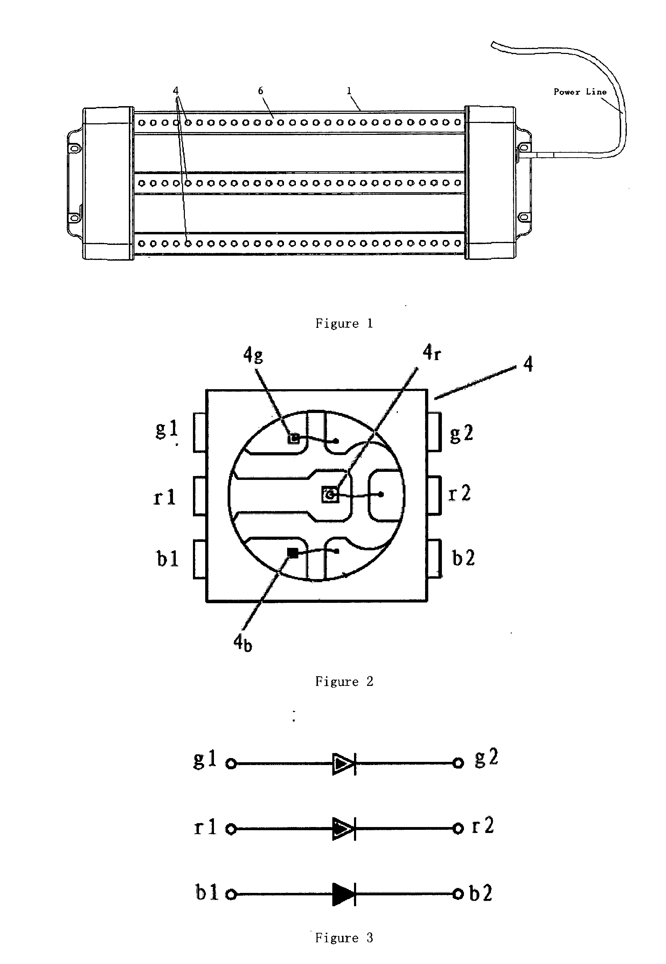

As is shown by Figure 1 to Figure 4, preferable embodiment 1 of the invention is that: adoption of a lighting method which enables aquatics to look bright and beautiful, and design and production of a LED lighting device which enables aquatics to look bright and beautiful: first of all, select LED chips 4r, 4g and 4b shooting red, green and blue light respectively to be assembled or directly inject-formed into an integrated LED lamp 4. The wavelength of the red, green and blue light shot from the LED chips4r, 4g and 4b are respectively: wavelength for red light λᵣ from 615nm to 630nm, wavelength for green light λ_{g} from 510nm to 530nm and wavelength for blue light λ_{g} from 455nm to 475 nm.

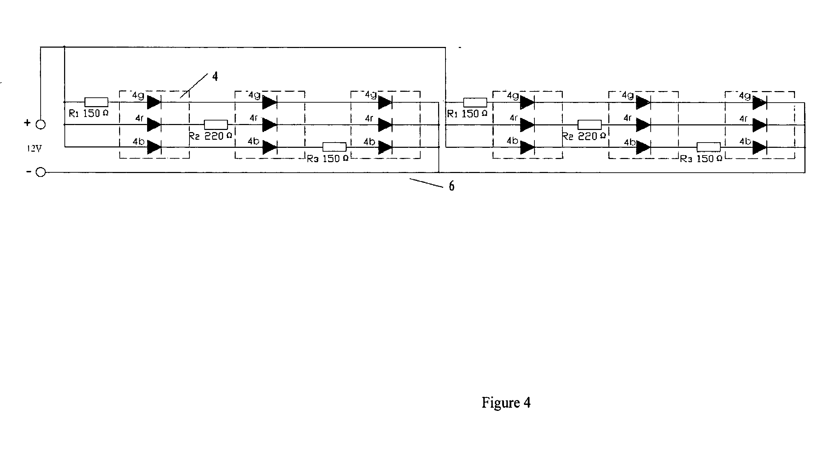

With respect to the said LED lamp 4 as is shown in Figure 2, in it the area and electric power for the chip 4r shooting red light are respectively greater than that for the chip 4g and 4b shooting green or blue light. As show in Figure 4 , using the said LED lamps 4 to make up of light string 6, connect various chips 4r, 4g or 4b shooting the light of the same color in each LED lamp 4 composing the light string6 in series respectively, then connect a potentiometer in series for them respectively, adjust current of each series branch to appropriate value, when luminous flux Φ for the three base colors are respectively Φᵣ=32%, Φ_{g}=54% and Φ_{b}=14%, synthetic light shot from each LED lamp 4 is slightly white light and reddish violet, after each luminous flux reaches the required proportion, replace the said potentiometers by fixed resistors R1, R2 and R3 as shown by Figure 4 before mass production. Install the said light string 6 into the sealed waterproof lamp shell 1, then, the LED lighting device is produced. In this case, the LED lighting device is more applicable to be used in the aquarium where water depth is ≤ 1m.

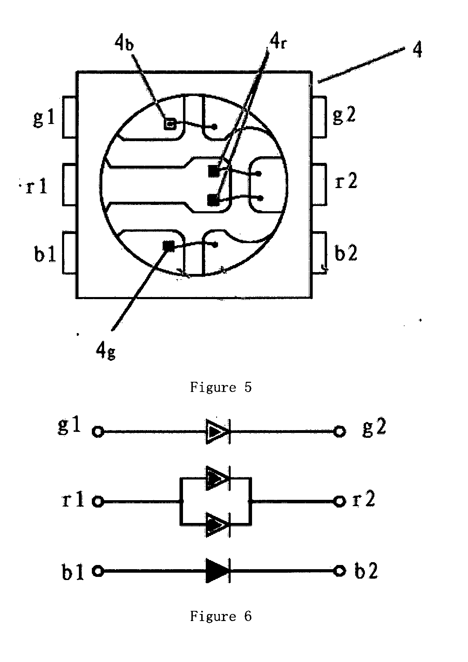

As is shown in Figure 1 and Figure 5 to 7, preferable embodiment 2 of the invention is that: select LED chips 4r, 4g and 4b shooting red, green and blue light respectively, which are assembled or directly inject-formed into an integrated LED lamp 4, the quantity of the chip 4r shooting red light is twice that of the chip 4g and 4b shooting green or blue light, while the area and electric power for single chip 4r shooting red light are respectively identical to that for single chip 4g or 4b shooting green or blue light. the wavelength of the red, green and blue light shot by the said LED chips 4r, 4g and 4b respectively are: wavelength for red light λᵣ from 615nm to 630nm, wavelength for green light λ_{g} from 510nmto 530nm and wavelength for blue light λ_{b} from 455nm to 475nm.

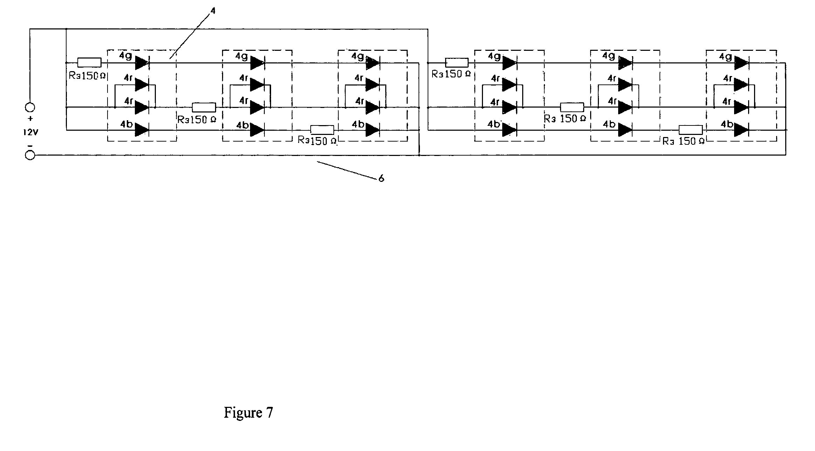

Refer to Figure 7, arrange and connect the said LED lamps 4 to be light string 6, in which, chips 4r, 4g or 4b shooting light of the same color are connected in series respectively, then each series branch is connected respectively with a potentiometer, adjust current of each series branch to appropriate value, when the luminous flux Φ for three base colors are respectively Φᵣ=41%, Φ_{g} =47% and Φ_{b} =12%, synthetic light shot by the said LED lamp 4 is slightly white light and reddish violet, when the luminous flux reaches the required proportion, replace the potentiometers by fixed resistor as shown by Figure 7 before mass production.

Install such light string 6 into the sealed waterproof lamp shell 1, then, a LED lighting device is produced. In this case, the LED lighting device is more applicable to be used in the aquarium where water depth is above 1m.

In the said embodiment 1 and embodiment 2, the wavelength of the red, green and blue light shot by the LED chips of the said LED lamp respectively are preferably: wavelength for red light λᵣ from 620nm to 625 nm, wavelength for green light λ_{g} from 520 nm to 525nm, and wavelength for blue light λ_{b} from 465 nm to 470 nm.

As is shown by the above two embodiments, we can adjust luminous flux of various color according to the water depth during the use of the said LED lighting device, i.e. the deeper the water the greater proportion of luminous flux for red light is required, for luminous flux Φ of such LED lamp, proportion of the three base colors red, green and blue shall respectively be Φᵣ from 32% to 41%, Φ_{g} from 47% to 54% and Φ_{b} from 12% to 14% optimally. Select enough quantity of the LED lamp 4, which is one of the above two embodiments ,arrange and connect the said LED lamps 4 to be light string 6, in which, chips 4r, 4g or 4b shooting light of the same color are connected in series respectively, then each series branch is connected respectively with a potentiometer or a resistor which adjust current of each series branch to appropriate value, when the luminous flux reaches the required proportion, replace the potentiometers by fixed resistor before mass production.

## Claims

1. A lighting method enabling aquatics to look bright and beautiful, is used for lighting device of aquaria, the lighting device includes a sealed waterproof lamp shell (1) and a light string (6) arranged and connected with LED lamps(4), the light string (6) positioned inside the sealed waterproof lamp shell, the method comprising steps as follows :
select LED chips (4r, 4g and 4b) shooting red, green and blue light respectively, which are assembled or directly inject-formed into an integrated LED lamp (4), synthetic light shot from the LED lamp(4) is slightly reddish violet, luminous flux Φ for three base colors red, green and blue are respectively Φᵣ from 32% to 41%, Φ_{g} from 47% to 54% and Φ_{b} from 12% to 14%.

2. The method of Claim 1, wherein the LED lamp(4) assembled or directly inject-formed into one, in it the area and electric power for the chip(4r) shooting red light are respectively greater than that for the chip (4g or 4b) shooting green or blue light.

3. The method of Claim 1, wherein the LED lamp (4) assembled or directly inject-formed into one, in it the quantity of the chip (4r) shooting red light is twice that of the chip (4g or 4b) shooting green or blue light, while the area and electric power for single chip (4r) shooting red light are respectively identical to that for single chip(4g or 4b) shooting green or blue light.

4. The method of Claim 1, further comprising the following step:
connect various chips (4r, 4g or 4b) shooting the light of same color in each LED lamp (4) composing the light string (6) in series respectively, then connect a potentiometer in series for them respectively, adjust current of each series branch to appropriate value, after proportion of luminous flux for the three colors has met requirements, replace the said potentiometer by a connect series-in fixed resistor respectively before mass production.

5. The method of Claim 1, wherein wavelength of the red, green and blue light shot from the chips (4r, 4g and 4b) of the said LED lamp (4) respectively are: wavelength for red light λᵣ from 615nm to 630 nm, wavelength for green light λ_{g} from 510 nm to 530 nm, and wavelength for blue light λ_{b} from 455 nm to 475 nm.

6. The method of Claim 1, wherein wavelength of the red, green and blue light shot from the chips (4r, 4g and 4b) of the said LED lamp (4) respectively are: wavelength for red light λᵣ from 620nm to 625 nm, wavelength for green light λ_{g} from 520nm to 525 nm, and wavelength for blue light λ_{g} from 465 nm to 470 nm.

7. A LED lamp which enables aquatics to look bright and beautiful, which is also used for lighting device of aquaria, wherein the said LED lamp (4) is assembled or directly inject-formed by various LED chips (4r, 4g and 4b) shooting red, green and blue light respectively into one, in it the area and electric power for the chips (4r) shooting red light are respectively greater than that for the chips (4g or 4b) shooting green or blue light.

8. The LED lamp of Claim 7, wherein the quantity of the chip (4r) shooting red light of the said LED lamp is twice that of the chip (4g or 4b) shooting green or blue light, while the area and electric power for the single chip (4r) shooting red light are identical to that for single chip (4g or 4b) shooting green or blue light.

9. The LED lamp of Claim 7 or Claim 8, wherein the wavelength of red, green and blue light shot by the LED chips(4r, 4g and 4b) of the said LED lamp(4) respectively are: wavelength for red light λᵣ from 615nm to 630 nm, wavelength for green light λ_{g} from 510 nm to 530 nm, and wavelength for blue light λ_{b} from 455 nm to 475 nm.

10. A LED lighting device which enables aquatics to look bright and beautiful, comprising a sealed waterproof lamp shell (1) and a light string (6) arranged and connected inside it with LED lamps (4), wherein the said LED lamp (4) is an integrated unit assembled or directly inject-formed with LED chips (4r,4g and 4b) shooting red, green and blue light respectively, in it the area and electric power for the chips (4r) shooting red light are respectively greater than that for the chips (4g or 4b) shooting green or blue light; chips (4r,4g and 4b) shooting light of the same color in the said LED lamps (4) of the said light string (6) are connected in series respectively, and in the each series branch is connected respectively with a resistor or a potentiometer which enable proportion of luminous flux for the three base colors to meet the requirements.

11. The LED lighting device of Claim 10, wherein the quantity of the chip (4r) shooting red light of the said LED lamp (4)is twice that of the chip (4g or 4b) shooting green or blue light, while the area and electric power for the single chip (4r) shooting red light are identical to that for single chip (4g or 4b) shooting green or blue light.

12. The LED lighting device of Claim 10 or Claim 11, wherein the wavelength of red, green and blue light shot by the chips (4r, 4g and 4b) of the said LED lamp (4) respectively are: the wavelength for red light λᵣ is from 615nm to 630 nm, wavelength for green light λ_{g} from 510 nm to 530 nm, and wavelength for blue light λ_{g} from 455 nm to 475 nm.

13. The LED lighting device of Claim 10, wherein among luminous flux Φ for the said light string(6), luminous flux for three base colors red, green and blue are respectively Φᵣ from 32% to 41%, Φ_{g} from 47% to 54% and Φ_{b} form 12% to 14%.
